(19) Europäisches Patentamt
European Patent Office
Office européen des brevets

(11) Publication number: 0 113 198 B1

(12) EUROPEAN PATENT SPECIFICATION

(45) Date of publication of patent specification: 25.04.90

(51) Int. Cl.[5]: C 01 B 3/02

(21) Application number: 83307344.8

(22) Date of filing: 02.12.83

(54) **Single-stage reforming of high hydrogen content feeds for production of ammonia syn gas.**

(30) Priority: 02.12.82 US 446187

(43) Date of publication of application: 11.07.84 Bulletin 84/28

(45) Publication of the grant of the patent: 25.04.90 Bulletin 90/17

(84) Designated Contracting States: BE DE FR GB IT NL

(56) References cited:
EP-A-0 106 076
GB-A-2 067 175
US-A-3 584 998
US-A-4 079 017
US-E- 24 311

(73) Proprietor: EXXON RESEARCH AND ENGINEERING COMPANY
P.O.Box 390, 180 Park Avenue
Florham Park, New Jersey 07932 (US)

(72) Inventor: Ruziska, Philip Andrew
RR1, Box M33 Mile Drive
Chester New Jersey (US)

(74) Representative: Northover, Robert Frank et al
Exxon Chemical Limited P.O. Box 1
Abingdon, Oxfordshire OX13 6BB (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 113 198 B1

Courier Press, Leamington Spa, England.

**Description**

Field of the invention

The present invention is directed to an improved process for the production of ammonia synthesis gas, and specifically to an improved process which utilizes a high hydrogen content feedstock gas in a single adiabatic reforming stage without requiring a primary reforming furnace system as is conventional in present processes.

Description of the prior art

Generally the manufacture of ammonia consists of preparing an ammonia synthesis gas from three separate process components: a nitrogen source, usually air; steam; and a hydrogen source which is conventionally either coal, petroleum fractions, or natural gases. For example, in the preparation of ammonia synthesis gas from a light hydrocarbon feedstock, which may range from natural gas to naphtha, the hydrocarbon feedstock gas is first purified by removing gaseous contaminants, such as sulfur (which would poison the downstream catalysts) from the feedstock by the catalytic hydrogenation of the sulfur compounds to hydrogen sulfide and adsorption of the hydrogen sulfide over a zinc oxide adsorption medium. Subsequent steam reforming of the contaminant-free gas provides the major portion of the hydrogen required for ammonia synthesis from the hydrocarbons in the gas. Reforming is accomplished by a two-stage process in which a mixture of steam and the purified feed gas are first reformed over catalyst in a primary reformer, followed by treatment in a secondary reformer to which air is introduced, in order to provide the required amount of $N_2$ for ammonia synthesis. However, reforming also produces carbon oxides. The carbon monoxide in the reformed gas is converted to carbon dioxide and additional hydrogen in a shift conversion step, and the carbon dioxide is removed by subsequent scrubbing. Further treatment of the raw synthesis gas by methanation is conventionally used to remove additional amounts of carbon dioxide and remaining carbon monoxide from the hydrogen-rich gas, resulting finally in an ammonia synthesis gas containing approximately three parts of hydrogen and one part of nitrogen, that is, the 3:1 stoichiometric ratio of hydrogen to nitrogen in ammonia. The ammonia synthesis gas is then converted to ammonia by passing the gas over a catalytic surface based upon metallic iron (conventionally magnetite) which has been promoted with other metallic oxides, and allowing the ammonia to be synthesized according to the following exothermic reaction:

$$N_2+3H_2 \rightarrow 2NH_3$$

The steam reforming of the sulfur-free light hydrocarbon feedback is conventionally carried out in a two-stage process wherein the first stage, that is primary reforming, produces a partially reformed gas. This partially reformed gas is introduced along with air into a second stage, that is secondary reforming, to obtain a greater concentration of hydrogen and a lesser concentration of hydrocarbons. The reaction processes occurring in the reforming of the feedstock gas begin with the breakdown of hydrocarbons to methane, carbon dioxide and carbon monoxide:

$$3nH_2O+3C_nH_{(2n+2)} \rightarrow nCH_4+nCO+nCO_2+(4n+3)H_2$$

and end with the reforming of these products by the desired endothermic methane reforming reaction:

$$CH_4+H_2O \rightarrow CO+3H_2$$

and by accompanying exothermic reactions:

$$2CH_4+7/2\ O_2 \rightarrow CO_2+CO+4H_2O$$

$$CO+H_2O \rightarrow CO_2+H_2$$

$$2H_2+O_2 \rightarrow 2H_2O$$

$$CO+1/2\ O_2 \rightarrow CO_2$$

The methane reforming reaction for the production of hydrogen is highly endothermic and, for feedstocks containing less than about 80 vol.% $H_2$ a large heat transfer is required, which conventionally involves the use of a high capital investment primary reforming furnace, which also consumes a significant amount of energy in the form of fuel. The catalyst for this primary reforming is normally a nickel catalyst supported on alumina.

The subsequent secondary reforming step takes place in a refractory-lined vessel which also contains a nickel catalyst supported on alumina. In conventional steam reforming processes, air is introduced into this adiabatic reforming stage to provide the needed nitrogen for the production of ammonia synthesis gas. Oxygen in the air also reacts with the combustion components in the gas stream coming from the primary

reforming stage to increase the temperature and provide heat for this additional reforming of hydrocarbons.

U.S. Patent 3,442,613 discloses a two-stage reforming process in which milder primary reforming conditions are employed which results in a larger amount of methane in the primary reformer effluent. Excess air is then fed to the secondary reformer to permit increased exothermic hydrogen combustion therein, which aids in the reforming of the larger methane volumes fed thereto. Thereafter, the excess $N_2$, introduced via the air feed to the secondary reformer, is removed in a cryogenic separation step.

U.S. Patent 3,584,998 relates to a one-stage reforming process in which natural gas, excess air and steam are preheated in heat exchange with reformer effluent gas and then reformed, followed by water gas shift and $CO_2$ scrubbing treatments and then by a cryogenic process in which excess $N_2$ is removed from the scrubbed reformer effluent gas.

U.S. Patent 3,649,558 also relates to a single stage reformer, in which air is introduced in excess amounts to the secondary-type reformer. Excess $N_2$ is removed in a subsequent cryogenic section.

U.S. Patents 4,079,017 and 4,162,290 relate to the use of parallel steam reformers for the primary reforming of the hydrocarbon feed.

B. Chatterjee, "Ammonia From Hydrocarbons—An Improved Process", *Fertiliser News,* pp. 19—22 (December 1980) discloses another single-stage reforming process in which oxygen-enriched excess air is combined with natural gas and steam and reacted in a autothermal reformer, followed by shift reactions, boiler feed water heat recovery, $CO_2$ recovery and methanation. Excess methane remains in the reformer effluent gas and is removed in a downstream cryogenic section, which also serves to separate excess $N_2$.

## Summary of the invention

The present invention is broadly directed to an improved process for the production of ammonia synthesis gas, and specifically to an improved process which utilizes a high-hydrogen content feedstock gas in a single adiabatic reforming stage without requiring a primary reforming furnace system as is conventional in present processes.

The improved process of this invention provides an ammonia synthesis gas which, after shift conversion, is characterized by low methane content and does not contain excess nitrogen, and which can therefore be passed directly, after conventional treatment for $CO_2$ scrubbing and methanation, to an ammonia synthesis reactor for formation of ammonia. The process therefore produces an ammonia syn gas stream without the need for use of the expensive cryogenic purification processes required by the prior art, and at the same time avoids the need to use a conventional primary reformer. This results in a large savings in equipment costs and on-going operating expenses.

The process of this invention also permits the use of higher process pressures in the reforming section than have theretofore been possible due to pressure design limitations imposed by current primary reformer tubing metallurgy.

The process of the present invention for producing an ammonia synthesis gas comprises:

(a) (i) admixing steam with a desulfurized, hydrogen-rich methane-containing feedstock gas and partially reforming the resulting gas mixture in a tubular heat exchanger (130, 130a) containing primary reforming catalyst while maintaining said gaseous mixture in indirect heat exchange with a secondary reformer effluent gas; and

(ii) recovering a partially reformed gas product from said tubular heat exchanger (130, 130a) and secondarily reforming said recovered, partially reformed gas product in a secondary reformer (140) in the presence of air, said air being introduced to said secondary reformer (140) in an amount sufficient to provide a hydrogen:nitrogen molar ratio of about 3:1 in the ammonia synthesis gas;

(b) recovering a secondary reformer gas effluent from said secondary reformer (140) and passing said secondary reformer effluent to said tubular heat exchanger (130, 130a) for indirect heating of said hydrogen-rich feedstock and steam gas mixture;

(c) recovering a partially cooled, secondary reformer effluent from said tubular heat exchanger (130, 130a) and passing said partially cooled effluent as feed to a shift conversion zone (160); and

(d) treating the reformed gas in the shift conversion zone (160) to convert CO catalytically with steam to $CO_2$ and hydrogen; and removing CO and $CO_2$ by absorption and methanation from the gas stream withdrawn from the shift conversion zone (160);

whereby an ammonia synthesis gas is withdrawn from said methanation step which is suitable for direct feed to an ammonia synthesis reaction.

## Brief description of the drawings

Figure 1 is a schematic illustration of a two-stage primary/secondary reforming process of the prior art.

Figures 2 and 3 are a schematic illustration of one embodiment of the process of the present invention.

Figure 4 is a schematic illustration of a reactor/exchanger for use in a second embodiment of the process of this invention.

## Detailed description of the invention

Referring to the drawings, and specifically the conventional primary and secondary reforming stages which have been highly simplified and illustrated in Figure 1, there is seen a primary reforming furnace

stage generally indicated by the numeral 10, having an upper convection section 8, and a lower primary reforming radiant section 12. The furnace is normally heated by burners mounted in the floor of the radiant section and supplied with fuel gas and combustion air as illustrated. Hot flue gas exiting the radiant section flows upwardly through convection section 8, past steam superheat exchangers 4 and 6, process air heat exchanger 7, steam generators 9 and 11, steam superheat generator 13, feed gas heat exchangers 15, and 16 and boiler feed water preheater 17, and is discharged through port 3.

As discussed previously, conventional two-stage reforming processes require the introduction of four separate process streams to the primary reformer: feed gas (for a source of hydrogen), steam, a source of nitrogen gas (which is conventionally process air) and fuel gas. Feed gas is introduced into the process and passes through feed gas heat exchangers 16 and 15, positioned in the primary reforming furnace's convection section 8.

This preheats the feed gas to approximately 400°C (750°F), the required temperature for the removal of sulfur over a zinc oxide desulfurization bed 20. Steam is produced by passing boiler feed water through heat exchangers 17, 9, and 11, and by passing the resulting steam for superheating through exchangers 13, 6 and 4, via steam drum 18, as shown, to achieve a steam temperature of approximately 650°C (1200°F). This steam is then combined with the desulfurized feed gas and fed to catalyst-filled reformer tubes 14 in radiant section 12. The partially reformed feed gas 28 is then discharged from the primary reformer furnace and fed into secondary adiabatic reformer 30 where it is combined with process air 29 that has been preheated in heat exchanger 7 to about 650°C (1200°F). The oxygen in this preheated process air reacts with combustibles ($H_2$, CO, and $CH_4$) in the partially reformed feed gas, and releases additional heat. Upon entering the secondary reformer's catalyst bed the gas mixture undergoes additional reforming with a decrease in temperature due to the more predominant endothermic reaction. The raw synthesis gas is discharged from the secondary reformer and undergoes additonal processing in conventional steps: carbon dioxide is formed from carbon monoxide in shift converter unit 40; carbon dioxide is removed in process unit 50; carbon monoxide and additional carbon dioxide is removed by methanation in process unit 60; the synthesis gas is compressed in compressor 70 to that required for ammonia synthesis in the ammonia synthesis system 80; vaporous ammonia undergoes further compression in refrigeration compressor 90; and is withdrawn from the process as ammonia product. Excess heat in the ammonia synthesis section is removed by means of boiler feed water heat exchanger 82.

Referring to Figure 2, wherein one embodiment of the process of this invention is illustrated, the selected high-hydrogen content feedstock is passed via conduit 108 to first heat exchanger 110 wherein it is heated, generally to a temperature of from about 150 to 180°C (300 to 350°F), by indirect heat exchange with a low temperature shift converter effluent gas, to be described in more detail below, which is passed to exchanger 110 via conduit 201.

The gas feedstocks which can be treated in accordance with the process of this invention for single-stage reforming are gases containing high concentrations of hydrogen, i.e., hydrogen concentrations greater than about 40 vol.%, and preferably greater than about 50 vol.% $H_2$, and most typically from about 50 to 80 vol.% $H_2$, in addition to lower hydrocarbons, small concentrations of carbon monoxide, and trace gases, such as $CO_2$, $H_2S$, COS, $N_2$ and argon. The lower hydrocarbons present in the gas feed generally comprise members selected from the group consisting of saturated aliphatic hydrocarbons having from 1 to 4 carbon atoms, and unsaturated aliphatic hydrocarbons having from 2 to 4 carbon atoms; are principally methane but also inclusive of ethylene, ethane and the like; and are generally present in a concentration of from about 15 to 30 vol.%. The carbon monoxide concentration in the gas feed is not critical and will generally range from about 0 to 25 vol.%. Among these potential high-hydrogen content feedstocks are coke gas or refinery gases, such as are discussed in U.S. Patent 3,649,558, in addition to coal pyrolysis gas, and feedstocks such as those available from an intermediate BTU gas (IBG) streams resulting from the gasification of coal or lignite using conventional gasification processes.

The heated feed gas is withdrawn from exchanger 110 via conduit 112 and may be admixed with sufficient steam (which can be introduced to conduit 112 via conduit 111) to supply the water of reaction required for a subsequent COS hydrolysis reaction (which can be effected in COS hydrolysis reactor 114), if COS is present in the feed. The quantity of steam which is thus introduced can vary widely and will generally comprise from about 2 to 4 vol.%, based on the total feed gas in conduit 112 withdrawn from exchanger 110. The COS reaction in reactor 114 can be effected by any conventional means, using conventional hydrolysis catalysts such as activated alumina. In this reactor, COS contained in the feed gas is converted into hydrogen sulfide gas at conventional hydrolysis conditions, which typically range from about 150 to 180°C (300 to 350°F) and from about 2070 to 4140 KPs (300 to 600 psig). If the feedstock gas does not contain COS, steam injection line 111 and COS hydrolysis reactor 114 can be eliminated from the system if desired.

The resulting gas mixture is withdrawn via conduit 116 and is introduced into second heat exchanger 118 wherein the gas is further heated, in this case by indirect heat exchange with a high temperature shift converter gas effluent (to be described in more detail below), which is introduced thereto via conduit 164. Thereafter, the further-heated gas which may contain the hydrogen sulfide and which will generally have a temperature of from about 370 to 400°C (700 to 750°F), is withdrawn via conduit 117 and introduced into sulfur removal zone 120, wherein the hydrogen sulfide impurities are removed from the gas stream by conventional technology, such as by use of a zinc oxide adsorption bed. The gas, now essentially free of

sulfur impurities (e.g., containing less than about 0.2 ppm by weight of sulfur compounds, calculated as elemental sulfur), is withdrawn via conduit 122 and admixed with steam, which can be accomplished by injected steam into conduit 122 via conduit 124. Again, the quantity of steam introduced at this point can vary, and will generally range from about 2.5 to 4.0 moles per mole of carbon in the desulfurized gas feed. The function of the steam introduced at this point in the process is to provide the water of reaction necessary for the subsequent reforming reactions. The steam/desulfurized gas mixture is then further heated (generally to a temperature of from about 430 to 540°C (800 to 1,000°F)) in third heat exchanger 126 by indirect heat exchanger with a portion of the reactor/exchanger effluent gas (to be described in more detail below) whic is introduced to exchanger 126 via conduit 138. The thus-heated steam/desulfurized gas mixture 128 is introduced into the tube side of tubular heat exchanger 130 wherein the feed gas is at least partially reformed by contacting the feed gas, under reforming conditions, in tubes 121 of reactor/exchanger 130 with a conventional reforming catalyst. Any conventional primary reforming catalyst can be employed, such as nickel, nickel oxide, chromia, molybdenum, mixtures thereof and the like, with nickel-on-calcium aluminate or nickel-on-alumina being preferred. The temperature within tubes 121 will generally range from about 480 to 820°C (900 to 1500°F) and the pressure will generally range from about 2070 to 6900 KPa (300 to 1000 psig), and the total gas hourly space velocity in tubes 121 will generally range from about 5000 to 15,000 v/v/hr., with a range of from 8000 to 10,000 v/v/hr. being preferred.

As a result for the reforming reactions occurring in tubular exchanger 130, substantially all of the hydrocarbon components of the feed gas (other than methane) are converted to $CH_4$, CO, $CO_2$ and $H_2$; a portion of the original methane components are likewise converted to CO, $CO_2$ and $H_2$; and the temperature of the gas mixture will be generally increased to about 700 to 730°C (1300 to 1450°F). The partially reformed gas will generally have a residual methane level of from about 5 to 20 vol.% $CH_4$, on a dry basis.

Process air obtained from any convenient source is passed via conduit 197 to fourth heat exchanger 196 wherein it is heated (generally to a temperature of from about 370 to 430°C (700 to 800°F)) by indirect heat exchange with a portion of the high temperature shift converter effluent gas which is passed thereto via conduit 166. The thus-heated process air is withdrawn via conduit 195 and passed to yet another heat exchanger 194 for further heating (generally to a temperature of from about 480 to 540°C (900 to 1000°F)) by indirect heat exchange with a portion of the cooled reformer effluent gas, which is passed thereto via conduit 135 from the shell side of exchanger 130. The thus-treated process air is then introduced via conduit 141 into secondary reformer 140, together with the partially reformed gas mixture which is introduced via conduit 136.

The quantity of air introduced via conduit 141 is adjusted using conventional control means (not shown), to provide an air:feed ratio sufficient to yield about a 3:1 hydrogen:nitrogen ratio in the ammonia synthesis gas, that is, to provide a $H_2$:$N_2$ ratio of from about 2.6:1 to 3.2:1, and preferably from about 2.8:1 to 3.1:1.

Secondary reformer 140 comprises an adiabatic reformer of conventional design and can be provided with suitable internal burners to be used during start-up of the process in order to bring the temperature within the reformer to within the range of from about 760 to 870°C (1400 to 1600°F), after which further heating can be accomplished via the heat released in the exothermic reaction of oxygen therein with feedstock. The amount and type of catalyst in reformer 140 is also conventional, with Ni catalysts supported on alumina being typical. The secondary reformer will generally employ a temperature of from about 870 to 1040°C (1600 to 1900°F), a pressure of from about 2070 to 6300 KPa (300 to 1000 psig), and a total gas hourly space velocity of form about 7000 to 10,000 v/v/hr.

The reformer effluent gas (generally having a temperature of from about 870 to 980°C (1600 to 1800°F) and a residual $CH_4$ level of from about 0.2 to 0.6 vol.% $CH_4$, on a dry basis) is withdrawn from secondary reformer 140 via conduit 134 and is passed to the shell side of reactor/exchanger 130 for indirect heat exchange with, and heating of, the steam/desulfurized feed gas mixture passed to exchanger 130 via conduit 128, as described above. The effluent gas withdrawn via conduit 132 is then divided into two portions. A first portion is passed via conduit 138 to third heat exchanger 126 for indirect heat exchange with, and heating of, the steam/desulfurized gas mixture as described above. The second portion is passed via conduit 135 to fifth exchanger 194 to provide the final stage of heating of the process air in conduit 195 prior to its injection into secondary reformer 140. The partially cooled reformer effluent gas is withdrawn from third exchanger 126 via conduit 139 and passed to steam superheater 142 and first steam generator 158, superheater 142 receiving steam via conduit 144 (generally at a temperature of from about 310 to 315°C (590 to 600°F) and about 10300 KPa (1500 psig)) from steam drum 150 and producing superheated steam which is withdrawn via conduit 143 (generally at a temperature of about 430 to 480°C (800 to 900°F) and about 10300 KPa (1500 psig)), and via conduit 146 to generator 158 in turn generating steam 159 from water stream 157 which is fed thereto from steam drum 150. From generator 158, the cooled reformer effluent is passed via conduit 155 to high temperature shift converter 160, wherein carbon monoxide in the reformer effluent gas is converted over conventional catalysts and using conventional methods and equipment to carbon dioxide and additional hydrogen. Partially cooled effluent gas is also withdrawn via conduit 137 from fifith exchanger 194 and is recombined with the remaining reformer effluent in conduit 155.

Generally, a temperature of from about 380 to 480°C (700 to 900°F) and a pressure of from about 2070 to 6300 KPa (300 to 1000 psig) will be employed in converter 160, and the catalyst will generally comprise a

supported, chromium-promoted iron catalyst. Thereafter, gas exiting the high temperature shift converter is withdrawn via conduit 162 and is itself split into two portions. A first portion is passed via conduit 164 to second heat exchanger 118 for heating of the gas feed to desulfurization zone 120, as described above. The partially cooled effluent gas is then withdrawn via conduit 165 from exchanger 118 and passed to low temperature shift converter 200, preferably after treatment in guard bed 190.

The second portion of the gaseous effluent from the high temperature shift converter 160 is passed via conduit 169 to a second steam generator 152 in which steam 151 is produced from water feed 153 and is returned to drum 150 from which water 153 was received. The partially cooled high temperature shift effluent from generator 152 is then itself split into two portions: a first part is passed via conduit 166 to fourth heat exchanger 196 to provide the first stage of heating of the process air, introduced thereto via conduit 197, as described above. The further cooled effluent gas is then withdrawn via conduit 167 and passed to conduit 165 for combined feed to the low temperature shift converter 200, or preferably first to guard bed 190.

The second part of shift effluent from exchanger 152 is passed via conduit 168 to boiler feedwater exchanger 170 in which boiler feedwater, introduced thereto via conduit 180, is heated and passed via conduit 172 to drum 150 and from which the further cooled shift effluent is withdrawn (via conduit 174) and combined with stream 165 for feed to low temperature shift converter 200, or preferably first to guard bed 190. If desired, feedwater 180 can be first heated by exchange with low temperature shift effluent 201 in a separate exchanger (not shown) prior to introduction to exchanger 170.

Guard bed 190, which is optional, is preferably employed to treat gas stream 165 upstream of low temperature shift converter 200 to remove halide and sulfur impurities and thereby protect any halide- and sulfur-sensitive catalyst in low temperature shift converter 200. The operation of guard bed 190 is conventional and is generally conducted at temperatures and pressures within the ranges used in low temperature shift converter 200 as described below to which guard bed 190 is connected via conduit 192, and the solids employed in guard bed 190 for such halide- and S-impurities removal generally comprise the same catalyst as is used in low temperature shift converter 200.

In shift converter 200, a low temperature shift conversion reaction is effected over conventional catalyst using conventional methods and equipment to form additional quantities of $H_2$ and $CO_2$. Generally, a temperature of from about 205 to 260°C (400 to 500°F) and a pressure of from about 2070 to 6900 KPa (300 to 1000 psig) will be employed in converter 200, and the catalyst will generally comprise a mixture of zinc oxide and copper. The effluent gas from low temperature shift converter 200 is passed via conduit 201 to first heat exchanger 110, as described above, for heating of the feed gas introduced thereto via conduit 108. The cooled, low temperature shift converter effluent gas, now depleted of its heat values, is then withdrawn via conduit 106 and (referring now to Figure 3) can be passed to $CO_2$-removal zone 250, in which any conventional process (e.g., solvent absorption of $CO_2$ gas) can be used to remove $CO_2$ via conduit 210. The resulting $CO_2$-free gas is fed by conduit 220 to conventional methanator zone 300 for removal of additional CO and $CO_2$ and is then withdrawn (via conduit 320), compressed in compressor 350 and passed as direct feed via conduit 370 to ammonia synthesis zone 400, wherein $NH_3$ is formed from the $H_2/N_2$ synthesis gas 370 (i.e., 3:1 $H_2:N_2$ molar ratio) using conventional techniques (i.e., over Fe-catalyst at 370 to 510°C (700 to 950°F)). Waste gases are withdrawn via conduit 410 and product $NH_3$ is recovered via conduit 420.

The operation of $CO_2$ removal zone 250, methanation zone 300, compressor 350 and $NH_3$ synthesis zone 400 is conventional and need not be more completely described for a full understanding of the process of this invention. The precise operating parameters and equipment of each such process step, therefore, will be readily apparent to one having ordinary skill in the art, and each step can include the usual internal recycle streams and stages found useful in the prior art. Thus, $CO_2$-removal zone 250 can include conventional $CO_2$-absorption and $CO_2$-desorption stages wherein the $CO_2$-laden gas 106 is contacted with a liquid containing either a solvent for, or a dissolved compound (e.g., $K_2CO_3$) readily reactive with, the $CO_2$; the $CO_2$-free gases (generally containing less than about 0.15 vol.% $CO_2$) are withdrawn; and the solvent is treated to desorb the $CO_2$ gases 210 for recycle of solvent to the absorber. Exemplary of suitable conventional $CO_2$ removal systems are those discussed in Kirk-Othmer, *Encyclopedia of Chemical Technology,* 3d Ed., Vol. 2, pp. 492—494 (1978). Similarly, methanator 300 will generally employ a temperature in the range of about 300 to 500°C (570 to 940°F), a pressure from about 2070 to 6900 KPa (300 to 1000 psig), and a supported Ni catalyst (e.g., Ni on alumina) to convert any remaining CO and $CO_2$ in gas stream 220 to methane, thereby producing an effluent gas 320 containing less than about 10 vppm (i.e., parts per million by volume) of total CO and $CO_2$ and $H_2$ and $N_2$ in a $H_2:N_2$ molar ratio of from about 2.6:1 to 3.1:1. Compression in zone 350 can take place in several stages, as desired, to bring the methanator effluent to synthesis reactor pressure, which generally ranges from about 13800 to 34500 KPa (2000 to 5000 psig). Finally, ammonia synthesis zone 400 can include conventional dryer units wherein trace water is removed from the syn gas as required and conventional purge recovery units wherein a portion or all of the gas effluent from the ammonia synthesis reactor is treated to recover and recycle $H_2$ to the reactor and to remove inserts such as $CH_4$ and Ar therefrom.

The improved process of this invention produces a syn gas 370, having a $H_2:N_2$ molar ratio of about 3:1, that is a $H_2:N_2$ molar ratio of from about 2.6:1 to 3.2:1, and which has a residual methane concentration (dry basis) of less than about 2 vol.%, and more typically less than about 1 vol.% and which is therefore suitable for direct feed to an ammonia synthesis reactor zone 400, that is a syn gas 320 which is not

subjected to a cryogenic purification following methanator 300 to remove excess methane prior to the ammonia synthesis reaction. The elimination of the cryogenic section required by the prior art and the avoidance of the use of a primary reformer furnace by the improved process of this invention results in a very large savings in terms of equipment investment and operating expense.

In accordance with another embodiment of the process of this invention, illustrated in Figure 4, steam/desulfurized gas mixture 128a is passed to the shell side of reactor/exchanger 130a and the selected reforming catalyst is housed in the shell side of apparatus 130a. The steam/desulfurized gas mixture is at least partially reformed over the catalyst while being heated by means of reformer effluent gas 134a, which in this embodiment is passed to the tube side 121a of reactor/exchanger 130a. The partially reformed gas 136a and the partially cooled reformer effluent gas 132a are withdrawn and further treated as described above for streams 132 and 136, respectively, in the embodiment illustrated in Figure 2. The conditions of operation of apparatus 130a in Figure 4 correspond to those discussed above for apparatus 130 in the embodiment illustrated in Figure 2.

To further illustrate the process, a feed gas containing 52 vol.% $H_2$, 20 vol.% CO, 28 vol.% $CH_4$ and 30 vppm COS, having a temperature of about 45°C (110°F) and a pressure of about 2410 KPa (350 psig), is preheated to about 160°C (315°F) in tubular feed gas preheat exchanger 110, and is then introduced into COS hydrolysis drum 114, after addition of 2 vol.% steam 400°C (750°F), 4140 KPa (600 psig)), based on total feed gas 112, (withdrawn from exchanger 110), in which the carbonyl sulfide is converted to hydrogen sulfide over a bed of an alumina hydrolysis catalyst (at 160°C (315°F), 2410 KPa (350 psig), 2000 v/v/hr. gas hourly space velocity). The temperature of the resulting feed gas is increased to about 400°C (750°F), the temperature required for further desulfurization, by passing the hydrogen-sulfide-containing gas through tubular heat exchanger 118, followed by adsorption of the hydrogen sulfide over a zinc oxide absorption bed 120.

To the sulfur-free feed gas discharged from zinc oxide adsorption bed 120 is then added 3.0 moles of steam (400°C (750°F), 4140 KPa (600 psig)) per mole of carbon in the feed gas, and this combined stream passes through tubular heat exchanger 126 in order to increase the gas temperature to about 480°C (900°F).

An additional increase in the temperature of this combined stream (to about 760°C (1400°F)) is obtained by subsequent preheat treatment in the tube side 121 of reactor/exchanger 130 in indirect heat exchange with reformer effluent gas entering the shell side of exchanger 130 and in contact with nickel on alumina reforming catalyst in tubes 121 (at 745°C (1375°F), 2240 KPa (325 psig), 9000 v/v/hr.) so that partial steam reforming of hydrocarbons takes place in exchanger 130, further contributing to the preheat of this feed stream to be charged to reformer 140.

Process air is adjusted using conventional control means (not shown) to provide an air:feed ratio sufficient to yield about a 3:1 $H_2$:$N_2$ ratio in the final product ammonia synthesis gas 320. The adjusted process air enters the process by first being pressurized (compressor not shown) to about 345 KPa (50 psi) above the pressure used in reformer 140. The pressurized process air is then preheated in tubular heat exchangers 196 and 194 to a reforming inlet temperature of about 540°C (1000°F).

The heated process air feed and the steam-feed gas streams are then introduced into adiabatic reformer 140 wherein reforming of the feed gas takes place over Ni on alumina reforming catalyst (at a space velocity of about 7000 v/v/hr.).

The reformer effluent gas from reformer 140 (940°C (1730°F), 2210 KPa (320 psig)) is discharged, as discussed above, into the shell side of exchanger 130 and from exchanger 130 (610°C (1130°F), 2170 KPa (315 psig)) is passed to feed preheat exchanger 126 and air preheat exchanger 194. The partially cooled reformer effluent from feed gas preheat exchanger 126 is passed to steam superheater 142 and first steam generator 158 for generation of 10300 KPa (1500 psig) steam, and the resulting cooled reformer effluent withdrawn from generator 158 is combined with the remaining cooled reformer effluent 137 and passed via conduit 155 (370°C (700°F), 2140 KPa (310 psig)) to high temperature shift converter 160. In converter 160, a water gas shift reaction is effected over an iron-based catalyst (380°C (720°F) inlet temperature, 2140 KPa (310 psig)) to form $H_2$ and $CO_2$ from CO contained in the reformer effluent gas. Gases exiting converter 160 (450°C (850°F), 2070 KPa (300 psig)) are then passed to heat exchangers 118, 196 and 170 and steam generator 152 (generating steam at 1500 psig) as described above, combined in conduit 165 (215°C (420°F), 2070 KPa (300 psig)) and fed to low temperature converter guard bed 190 containing ZnO/Cu solids to absorb any Cl and S values which may be present, followed by treatment in low temperature shift converter 200, containing conventional ZnO/Cu shift conversion catalyst. After passing through heat exchanger 110, the product gases (at 230°C (450°F), 2000 KPa (290 psig)) are withdrawn via conduit 106, and treated for $CO_2$ removal in $CO_2$ removal zone 250, methanated in methanator 300, compressed and then fed to ammonia synthesis zone 400, as described above. The ammonia synthesis gas withdrawn from methanator 300 contains $H_2$:$N_2$ in about a 3:1 molar ratio and contains less than about 1.0 vol.% $CH_4$ (dry basis), and less than about 10 vppm CO and $CO_2$.

A feedstock 108 suitable for the single stage reforming process of the present invention is, for example, a steam cracker tail gas having a hydrogen content of about 70%, with the remainder being methane, or an IBG stream from a coal gasification process having major component composition of hydrogen (60%), carbon monoxide (20%), and methane (16%). Still another feedstock suitable for the single stage reforming process of the present invention, and that used as the feedstock material for obtaining the data in Table 1

has the composition of hydrogen (52.13%), carbon monoxide (19.39%), methane (27.03%), carbon dioxide (0%), nitrogen (0%), and mixed 2-carbon hydrocarbons (1.45%).

A comparison of the parameters is tabulated in the following Table 1 for (1) a conventional process as shown in Figure 1, except that the primary reformer is omitted, conducted at the maximum practical preheat temperature for feedstock and air; and (2) single stage reforming using the feed/effluent reactor/exchanger 130, as depicted in Figure 2.

TABLE
Single-stage reforming of IBG for ammonia synthesis gas

| | Maximum feed preheat-conventional (without primary reforming) | Apparatus/ stream No. (Fig. 1*)[1] | Reactor/ exchanger (Figures 2 & 3) | Apparatus/ stream (Figures 2 & 3) |
|---|---|---|---|---|
| Feed/steam preheat temperature °C (°F) | 491 (916) | 28 | 480 (900) | 128 |
| Air preheat temperature, °C (°F) | 540 (1000) | 29 | 540 (1000) | 141 |
| Steam/feed, mols/mol | 1.479 | 28 | 1.479 | 128 |
| Reformer pressure, kpa (psia) | 2410 (350) | 30 | 2310 (335) | 140 |
| Vol.% $O_2$ in air stream | 20.95 | 29 | 20.95 | 141 |
| Reformer feed-steam inlet temperature, °C (°F) | 491 (916) | 28 | 745 (1375) | 128 |
| Reformer outlet temperature, °C (°F) | 767 (1413) | 32 | 944 (1732) | 134 |
| Vol.% $CH_4$ in reformer outlet (dry basis) | 5.86 | 32 | 0.34 | 134 |
| Vol.% $CH_4$ in syn gas product (dry basis) | 7.04 | 66 | 0.92 | 320 |
| Feed gas/product $H_2$, mols/mol | 0.88 | 66 | 0.65 | 320 |

[1] Figure 1*= process of Figure 1 without reforming in primary reformer 10: composition of feed gas/steam mixture 24 is the same as stream 28 which is passed directly to secondary reformer 30.

Table 1 clearly indicates that a feed/steam preheat to 1375°F in the reactor/exchanger and accompanying partial reforming of hydrocarbons therein results in a decrease in a final product syn gas methane content from an unacceptably high 5.86 vol.% to 0.34 vol.%, thereby indicating the greater reforming efficiency obtained utilizing the reactor/exchanger 130.

When the amount of feed gas required to produce a constant amount of hydrogen in the ammonia syn gas is calculated, the efficiency of the total process is easily seen. For example, as shown in Table 1, 0.65 lb-mols/hr. of feed gas are required to produce 1.0 lb-mols/hr. of hydrogen in the product syn gas in the reactor/exchanger process design depicted in Figure 2, whereas 0.88 lb-mols/hr. of feed gas are required to produce the same amount of hydrogen under the conventional process design depicted in Figure 1 when the primary reformer is omitted.

The advantages of the process design according to the present invention are therefore seen as a reduction in capital expenditure associated with the construction of a primary reforming furnace, as otherwise required to produce an acceptable concentration of methane in product synthesis gas, an economic savings in utility costs expended in the heating of said primary reforming furnace, a desirable decrease in the methane slippage of the ammonia syn gas produced, and a greater efficiency in utilizing the feed gas requirements to yield the ammonia syn gas produced.

Thus, while I have illustrated and described the preferred embodiment of my invention, and have described my invention and the manner and process of making and using it in such full, clear, concise and exact terms as to enable any person skilled in the art to which it pertains to make and use the same, one

skilled in the art can easily ascertain the essential characteristics of this invention and without departing from the spirit and scope thereof can make various changes and/or modifications to the invention for adapting it to various usages and conditions. Accordingly, such changes and/or modifications are properly intended to be within the full range of equivalents of the following claims.

## Claims

1. Process for producing an ammonia synthesis gas which comprises:

(a)(i) admixing steam with a desulfurized, hydrogen-rich methane-containing feedstock gas and partially reforming the resulting gas mixture in a tubular heat exchanger (130, 130a) containing primary reforming catalyst while maintaining said gaseous mixture in indirect heat exchange with a secondary reformer effluent gas; and

(ii) recovering a partially reformed gas product from said tubular heat exchanger (130, 130a) and secondarily reforming said recovered, partially reformed gas product in a secondary reformer (140) in the presence of air, said air being introduced to said secondary reformer (140) in an amount sufficient to provide a hydrogen: nitrogen molar ratio of about 3:1 in the ammonia synthesis gas;

(b) recovering a secondary reformer gas effluent from said secondary reformer (140) and passing said secondary reformer effluent to said tubular heat exchanger (130, 130a) for indirect heating of said hydrogen-rich feedstock and steam gas mixture;

(c) recovering a partially cooled, secondary reformer effluent from said tubular heat exchanger (130, 130a) and passing said partially cooled effluent as feed to a shift conversion zone (160); and

(d) treating the reformed gas in the shift conversion zone (160) to convert CO catalytically with steam to $CO_2$ and hydrogen; and removing CO and $CO_2$ by absorption and methanation from the gas stream withdrawn from the shift conversion zone (160);

whereby an ammonia synthesis gas is withdrawn from said methanation step which is suitable for direct feed to an ammonia synthesis reaction.

2. The process of claim 1 wherein said desulfurized, hydrogen-rich feedstock gas contains hydrogen in a concentration of at least about 40 vol.%.

3. The process of claim 2 wherein said desulfurized hydrogen-rich feedstock gas contains methane in a concentration of from about 10 to 50 vol.%, calculated on a dry basis.

4. The process of claim 1 wherein said desulfurized hydrogen-rich feedstock gas contains hydrogen in a concentration of from about 50 to about 80 vol.% and contains methane in a concentration of from about 16 to about 40 vol.%, calculated on a dry basis.

5. The process of any one of claims 1 to 4 wherein said desulfurized hydrogen-rich feedstock gas is obtained by subjecting a hydrogen-rich gas containing COS to hydrolysis in a hydrolysis zone (114) in the presence of steam to form $H_2S$ from said COS, and removing said $H_2S$ to form said desulfurized feedstock gas.

6. A process according to any one of claims 1 to 5 in which:

(i) the mixture comprising steam and desulfurized hdyrogen-rich feedstock gas is formed at a temperature of from about 430°C to 650°C (800 to 1200°F);

(ii) the said partially reformed gas mixture and process air is fed to said secondary reformer for secondary reforming of said partially reformed feedstock gas at a temperature of from about 430°C to 650°C (800 to 1200°F); and

(iii) the partially cooled reformer effluent from said tubular heat exchanger is employed to heat additional quantities of said steam/feedstock gas mixture and said process air, thereby forming a further cooled secondary reformer effluent gas having a temperature of from about 540°C to 650°C (1000 to 1200°F).

## Patentansprüche

1. Verfahren zur Erzeugen eines Ammoniaksynthesegases durch:

(a)(i) Zumischen von Dampf mit einem entschwefelten, wasserstoffreichen methanhaltigen Einsatzgas und teilweises Reformieren der erhaltenen Gasmischung in einem rohrförmigen Wärmeautauscher (130, 130a), der einen primären Reformierungskatalysator enthält, während die gasförmige Mischung in indirektem Wärmeaustausch mit einem Sekundärreformierungs-Spülgas gehalten wird; und

(ii) Wiedergewinnen eines teilweise reformierten Gasprodukts aus dem rohrförmigen Wärmeautauscher (130, 130a) und sekundäres Reformieren des wiedergewonnenen, teilweise reformierten Gasprodukts in einem Sekundärreformer (140) in Anwesenheit von Luft, wobei die Luft in den Sekundärreformer (140) in einer Menge eingeleitet wird, die ein Wasserstoff:Stickstoff Molverhältnis von etwa 3:1 in dem Ammoniaksynthesegas liefert;

(b) Wiedergewinnen eines Sekundärreformerabgases aus dem Sekundärreformer (14) und Leiten des Sekundärreformerabgases zu dem rohrförmigen Wärmeaustauscher (130, 130a) zum indirekten Erwärmen des wasserstoffreichen Einsatzproduktes und der Dampfgasmischung;

(c) Wiedergewinnen eines teilweise gekühlten, Sekundärreformerabgases aus dem rohrförmigen

Wärmeaustauscher (130, 130a) und Leiten des teilweise gekühlten Abgases als Einsatzprodukt in eine Verschiebungs-Umwandlungszone (160); und

(d) Behandeln des reformierten Gases in der Verschiebungs-Umwandlungszone (160), um CO katalytisch mit Dampf in $CO_2$ und Wasserstoff umzuwandeln; und Entfernen von CO und $CO_2$ durch Absorption und Methanisierung aus dem Gasstrom, der aus der Verschiebungs-Umwandlungszone (160) abgezogen wird; wodurch eine Ammoniaksynthesegas aus dem Methanisierungsschritt abgezogen wird, das zum direkten Einleiten in eine Ammoniaksynthesereaktion geeignet ist.

2. Verfahren nach Anspruch 1, wobei das entschwefelte, wasserstoffreiche Einsatzgas Wasserstoff in einer Konzentration von mindestens etwa 40 Vol.% enthält.

3. Verfahren nach Anspruch 2, wobei das entschwefelte, wasserstoffreiche Einsatzgas Methan in einer Konzentration von etwa 10—50 Vol.% berechnet auf Trockenbasis enthält.

4. Verfahren nach Anspruch 1, wobei das entschwefelte, wasserstoffreiche Einsatzgas Wasserstoff in einer Konzentration von etwa 50—80 Vol.% und Methan in einer Konzentration von etwa 16 bis etwa 40 Vol.% berechnet auf Trockenbasis enthält.

5. Verfahren nach einem der Ansprüche 1 bis 4, wobei das entschwefelte, wasserstoffreiche Einsatzgas erhalten wird, indem eine wasserstoffreiches, gashaltiges COS der Hydrolyse in einer Hydrolysezone (114) in der Anwesenheit von Dampf unterworfen wird, um $H_2S$ aus dem COS zu bilden und durch Entfernen des $H_2S$ zur Bildung des entschwefelten Einsatzgases.

6. Verfahren nach einem der Ansprüche 1 bis 5, wobei:

(i) die Mischung aus Dampf und entschwefeltem, wasserstoffreichem Einsatzgas bei einer Temperatur von etwa 430°C bis 650°C (800 bis 1200°F) gebildet wird;

(ii) die teilweise reformierte Gasmischung und die Prozessluft in den Sekundärreformer gespeist werden, um das teilweise reformierte Einsatzgas bei einer Temperatur von etwa 430°C bis 650°C (800 bis 1200°F) sekundär zu reformieren; und

(iii) das teilweise gekühlte Reformerabgas aus dem rohrförmigen Wärmeaustauscher verwendet wird, um zusätzliche Mengen des Dampf/Einsatzgasgemisches und der Prozeßluft zu erwärmen und dabei ein weiter gekühltes Sekundärreformerabgas zu bilden, das eine Temperatur von etwa 540°C bis 650°C (1000 bis 1200°F) hat.

## Revendications

1. Procédé de production d'un gaz de synthèse de l'ammoniac, qui consiste:

(a) (i) à mélanger de la vapeur d'eau avec une charge gazeuse désulfurée contenant du méthane, riche en hydrogène, et à reformer partiellement le mélange gazeux résultant dans un échangeur de chaleur tubulaire (130, 130a) contenant un catalyseur de reformage primaire tout en maintenant ledit mélange gazeux en relation d'échange indirect de chaleur avec le gaz sortant de l'appareil de reformage secondaire; et

(ii) à recueillir comme produit un gaz partiellement reformé dudit échangeur de chaleur tubulaire (130, 130a) et à reformer secondairement dans un appareil de reformage secondaire (140) ledit produit gazeux récupéré partiellement reformé, en présence d'air, cet air étant introduit dans ledit appareil de reformage secondaire (140) en une quantité suffisante pour qu'il y ait un rapport molaire de l'hydrogène à l'azote d'environ 3:1 dans le gaz de synthèse de l'ammoniac;

(b) à recueillir un effluent gazeux dudit appareil de reformage secondaire (140) et à faire passer l'effluent de l'appareil de reformage secondaire dans ledit échangeur de chaleur tubulaire (130, 130a) en vue du chauffage indirect dudit mélange gazeux de charge riche en hydrogène et de vapeur d'eau;

(c) à recueillir un effluent partiellement refroidi de l'appareil de reformage secondaire à la sortie dudit échangeur de chaleur tubulaire (130, 130a) et à transférer cet effluent partiellement refroidi comme charge dans une zone de conversion catalytique (160); et

(d) à traiter le gaz reformé dans la zone de conversion catalytique (160) pour convertir catalytiquement le CO avec de la vapeur d'eau en $CO_2$ et en hydrogène; et à éliminer le CO et le $CO_2$ par absorption et méthanation du courant gazeux déchargé de la zone de conversion catalytique (160);

ce qui a pour effet que l'on décharge de ladite étape de méthanation un gaz de synthèse de l'ammoniac qui convient comme charge directe pour une réaction de synthèse de l'ammoniac.

2. Procédé suivant la revendication 1, dans lequel ladite charge gazeuse désulfurée riche en hydrogène contient de l'hydrogène à une concentration d'au moins 40% en volume.

3. Procédé suivant la revendication 2, dans lequel la charge gazeuse désulfurée riche en hydrogène contient du méthane à une concentration d'environ 10 à 50% en volume, calculée sur base sèche.

4. Procédé suivant la revendication 1, dans lequel la charge gazeuse désulfurée riche en hydrogène contient de l'hydrogène à une concentration d'environ 50 à environ 80% en volume et contient du méthane à une concentration d'environ 16 à environ 40% en volume, calculée sur base sèche.

5. Procédé suivant l'une quelconque des revendications 1 à 4, dans lequel la charge gazeuse désulfurée riche en hydrogène est obtenue en soumettant un gaz riche en hydrogène contenant du COS à une hydrolyse dans une zone d'hydrolyse (114) en présence de vapeur d'eau pour former de l'hydrogène sulfuré $H_2S$ à partir dudit COS, et en éliminant ledit $H_2S$ pour former ladite charge gazeuse désulfurée.

6. Procédé suivant l'une quelconque des revendications 1 à 5, dans lequel:

(i) le mélange comprenant de la vapeur d'eau et une charge gazeuse désulfureé riche en hydrogène est formé à une température d'environ 430°C à 650°C (800 à 1200°F);

(ii) le mélange gazeux partiellement reformé et l'air utilisé dans le procédé sont chargés dans l'appareil de reformage secondaire en vue du reformage secondaire de la charge gazeuse partiellement reformée à une température d'environ 430°C à 650°C (800 à 1200°F); et

(iii) l'effluent partiellement refroidi de l'appareil de reformage provenant de l'échangeur de chaleur tubulaire est utilisé pour chauffer des quantités additionnelles de mélange de vapeur d'eau et de charge gazeuse et de l'air utilisé dans le procédé, de manière à former ainsi davantage d'effluent gazeux refroidi de l'appareil de reformage secondaire, se trouvant à une température d'environ 540 à 650°C (1000 à 1200°F).

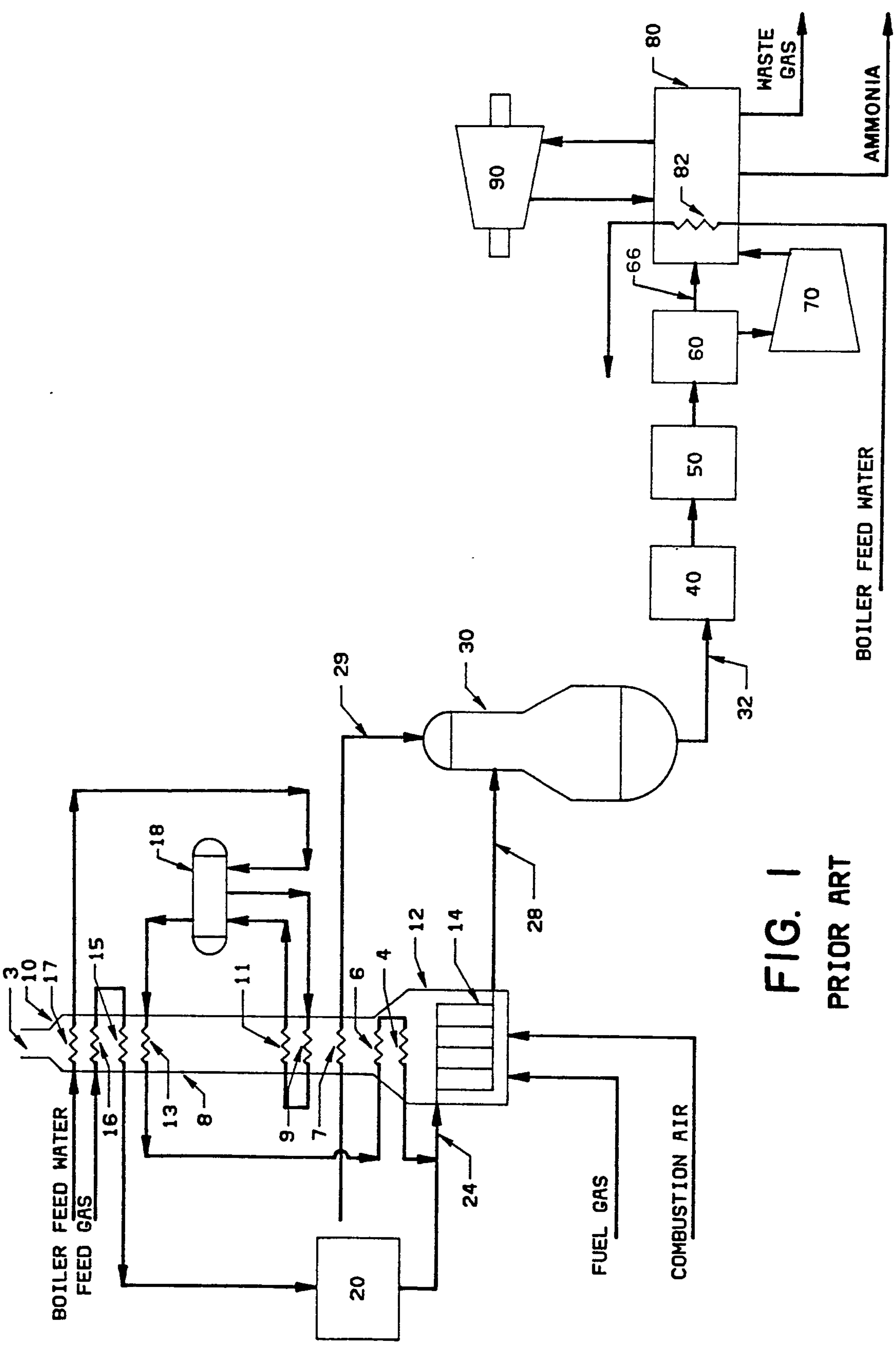


FIG. 1
PRIOR ART

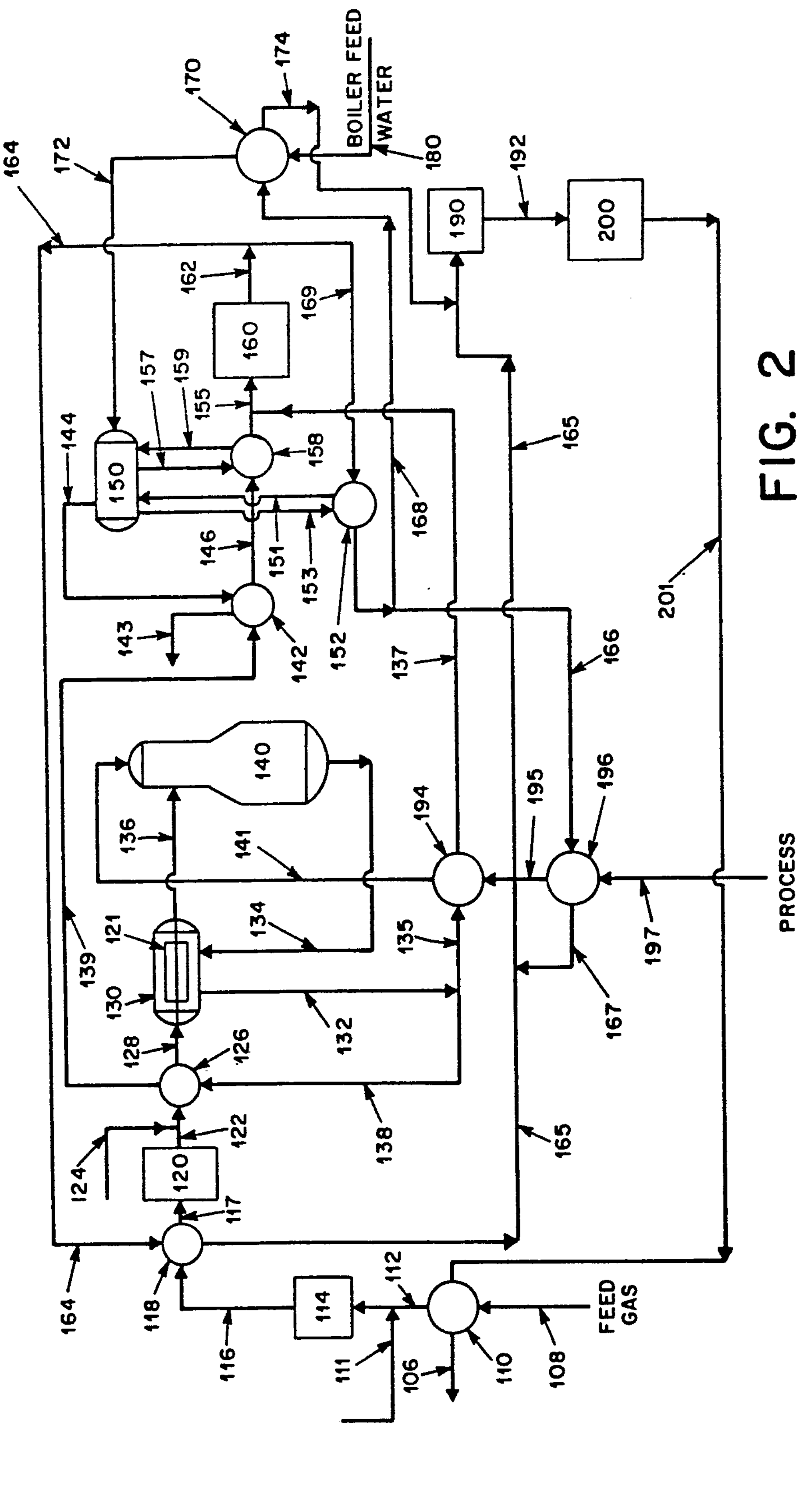
BOILER FEED WATER
PROCESS AIR
FEED GAS
106
108
110
111
112
114
116
117
118
120
121
122
124
126
128
130
132
134
135
136
137
138
139
140
141
142
143
144
146
150
151
152
153
155
157
158
159
160
162
164
165
166
167
168
169
170
172
174
180
190
192
194
195
196
197
200
201

FIG. 2

FIG. 3

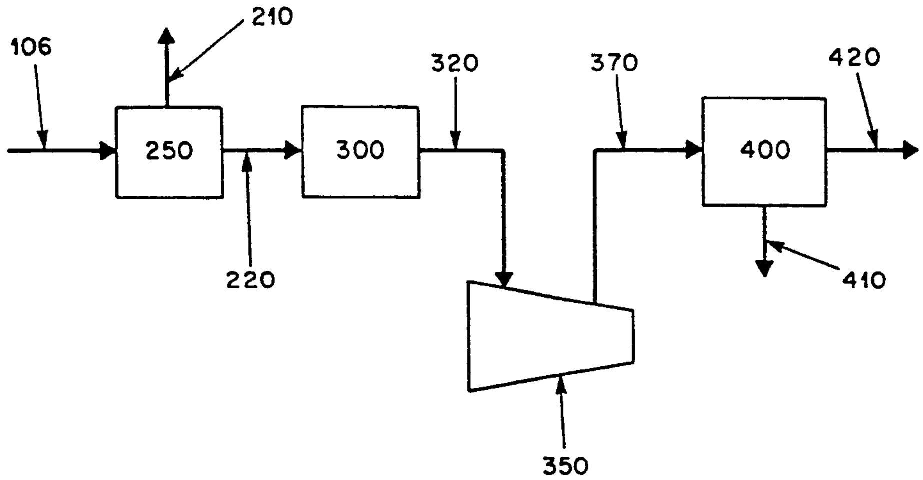
106
250
210
220
300
320
350
370
400
420
410

FIG. 4

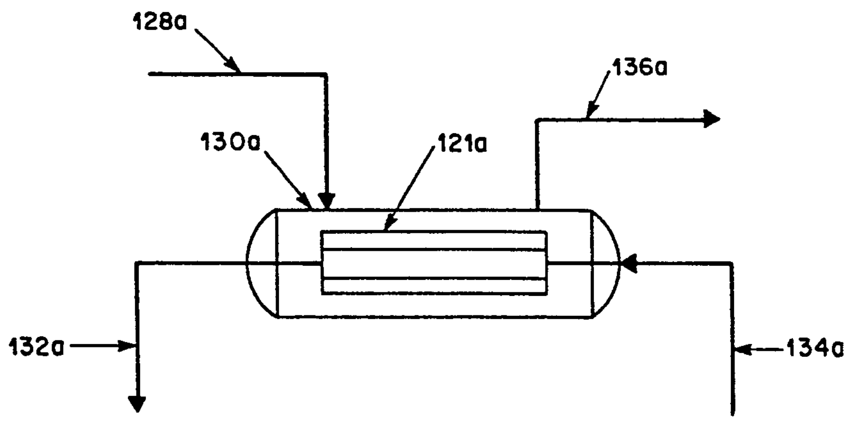
128a
136a
130a
121a
132a
134a